# EUROPÄISCHE PATENTSCHRIFT

(11) **EP 2 823 917 B1**
(45) Veröffentlichungstag und Bekanntmachung des Hinweises auf die Patenterteilung: **16.01.2019**
(21) Anmeldenummer: 14174634.7
(22) Anmeldetag: 27.06.2014
(51) Int. Cl.: B22F 3/105, B33Y 10/00, B33Y 30/00, B33Y 50/02

(54) **Regelung bei generativer Fertigung mittels Wirbelstromprüfung**
Regulation of generative production using eddy current test
Réglage pour la fabrication générative en utilisant une teste pour des courants de Foucault

(30) Priorität: 09.07.2013 DE 102013213370
(43) Veröffentlichungstag der Anmeldung: 14.01.2015
(73) Patentinhaber: MTU Aero Engines AG, 80995 München (DE)
(72) Erfinder: Jakimov, Andreas, 81245 München (DE); Schlick, Georg, 80809 München (DE); Bamberg, Joachim, 85221 Dachau (DE); Heß, Thomas, 81541 München (DE)

(56) Entgegenhaltungen:
- DE-A1-102011 008 774
- DE-A1-102011 009 624
- DE-A1-102011 111 818
- DE-C1- 19 835 860

## Beschreibung

### HINTERGUND DER ERFINDUNG

### GEBIET DER ERFINDUNG

Die vorliegende Erfindung betrifft ein Verfahren zur Herstellung eines Bauteils mittels eines generativen Herstellungsverfahrens, bei dem wiederholt schichtweise Material auf einer Grundplatte bzw. einem bereits entsprechend erzeugten Halbzeug aufgetragen und mit dem Halbzeug verbunden wird, wobei zur Verbindung des Materials mit dem Halbzeug Strahlungsenergie eingesetzt wird, die durch mindestens einen Strahl in das Material eingebracht wird, der relativ zur und über die Oberfläche des Halbzeugs bewegt wird. Außerdem betrifft die Erfindung eine entsprechende Vorrichtung zur Durchführung des Verfahrens.

### STAND DER TECHNIK

Generative Herstellungsverfahren zur Herstellung eines Bauteils, wie beispielsweise stereolithographische Verfahren, selektives Laserschmelzen, selektives Lasersintern, Elektronenstrahlschmelzen oder Laserauftragsschweißen werden in der Industrie für das sogenannte rapid tooling, rapid prototyping oder auch für die Herstellung von Serienprodukten im Rahmen des rapid manufacturing eingesetzt. Insbesondere können derartige Verfahren auch zur Herstellung von Turbinenteilen, insbesondere von Teilen für Flugtriebwerke eingesetzt werden, bei denen beispielsweise auf Grund des verwendeten Materials derartige generative Herstellungsverfahren vorteilhaft sind. Ein Beispiel hierfür findet sich in der DE 10 2010 050 531 A1.

Um besonders homogene Bauteileigenschaften und einen spannungsarmen Aufbau des Bauteils zu erzielen, werden im Stand der Technik sogenannte Belichtungsstrategien für die Relativbewegung des Energiestrahls zu dem Halbzeug beschrieben. Hierbei werden die Bewegungsbahnen eines Strahls, beispielsweise eines Laserstrahls, von Schicht zu Schicht des abzuscheidenden Materials geändert, um durch verschiedene Aufbauorientierungen ein homogenes Gefüge zu erzeugen. Ein Beispiel hierzu ist in der DE 10 2007 014 683 A1 beschrieben. Darüber hinaus treten durch die gegebenen Werkstoff- und Bauteileigenschaften Prozessschwankungen auf, die zu Inhomogenitäten führen können. Beispielsweise kann es aufgrund der Bauteilgeometrie zu ungleichmäßiger Abfuhr von Prozessgasen kommen, sodass dadurch Instabilität erzeugt Ein Verfahren zur zerstörungsfreien Prozesskontrolle während der generativen Herstellung ist in der Druckschriften DE 10 2011 111818 A1 und DE 10 2011 009624 A1 beschrieben. Bei diesem Verfahren wird eine Wirbelstromprüfung während der Herstellung durchgeführt.

### OFFENBARUNG DER ERFINDUNG

### AUFGABE DER ERFINDUNG

Es ist deshalb Aufgabe der vorliegenden Erfindung, eine weitere Verbesserung strahlungsbasierter, generativer Fertigungsverfahren bereit zu stellen, mit denen homogene Bauteileigenschaften erzielt werden können. Gleichzeitig soll das Verfahren einfach und effektiv anwendbar sein.

### TECHNISCHE LÖSUNG

Diese Aufgabe wird gelöst durch ein Verfahren mit den Merkmalen des Anspruchs 1 sowie eine Vorrichtung mit den Merkmalen des Anspruchs 6. Vorteilhafte Ausgestaltungen sind Gegenstand der abhängigen Ansprüche.

Die vorliegende Erfindung schlägt vor gleichzeitig mit dem generativen Aufbau eine Wirbelstromprüfung durchzuführen, um mittels der Wirbelstromprüfung Erkenntnisse über den Bearbeitungsprozess und den Schichtaufbau zu gewinnen, sodass aufgrund der Erkenntnisse über den Verlauf des generativen Aufbaus und/oder der Eigenschaften der abgeschiedenen Schichten die Homogenität und allgemein die Qualität des Schichtaufbaus bzw. des erzeugten Bauteils verbessert werden kann.

Entsprechend ist bei einer Vorrichtung zur generativen Herstellung von Bauteilen neben einer Strahlerzeugungseinrichtung zur Bereitsstellung eines energiereichen Strahls und einer Pulveranordnungseinheit, mit welcher eine Pulverschicht für den schichtweisen Aufbau des zu erzeugenden Bauteils bereitgestellt wird, eine Wirbelstrommessanordnung vorgesehen, mit der während des stoffschlüssigen Verbindens der Pulverpartikel mittels des energiereichen Strahls eine Wirbelstromprüfung durchgeführt werden kann.

Die Wirbelstrommessanordnung ist mindestens eine Spulenanordnung mit mindestens einer Senderspule und mindestens einer integrierten oder separaten Empfängerspule, vorzugsweise mit einer Differenz - oder Multi - Differenzspule ausgestattet.

Bei einer integrierten Empfängerspule werden Senderspule und Empfängerspule durch eine Spule verwirklicht, während bei separaten Sender- und Empfängerspulen getrennte Spulen für das Senden und das Empfangen vorliegen.

Bei der Wirbelstromprüfung werden durch die Senderspule Wirbelströme in dem zu untersuchenden Material erzeugt, die wiederum wechselnde elektromagnetische Felder erzeugen, die mit der Empfängerspule detektiert werden können. Mittels der detektierten elektromagnetischen Felder lassen sich Rückschlüsse auf das untersuchte Material ziehen und eine Charakterisierung des aufgebauten Materials vornehmen.

Mittels einer Differenz - bzw. Multi - Differenzspule, bei der mindestens zwei separate Empfängerspulen vorgesehen sind, lassen sich externe Einflüsse auf das Messergebnis, wie beispielsweise Temperaturänderungen, ausschließen.

Die bei der Wirbelstromprüfung gewonnenen Messwerte bzw. mindestens ein entsprechender Messwert lassen sich zur Steuerung und insbesondere automatischen Regelung des schichtweisen Aufbaus bzw. insbesondere des stoffschlüssigen Verbindens einsetzen, indem entsprechende Parameter des schichtweisen Aufbaus, wie beispielsweise Strahlungsleistung, Einstellung des Strahldurchmessers, Einstellung der Bewegungsgeschwindigkeit des Strahls über die zu bearbeitende Oberfläche, Einstellungen zur Belichtungsstrategie, wie zum Beispiel die Belichtungsreihenfolge, Einstellungen für eine eventuelle Vorheizung des Pulvers und/oder des zu bildenden Bauteils, Einstellungen zur Schichtdicke der aufgebrachten Pulverpartikel und dergleichen in Abhängigkeit der Messergebnisse variiert werden können.

Entsprechend kann die Vorrichtung zur generativen Herstellung von Bauteilen gemäß der vorliegenden Erfindung eine Regelungseinheit umfassen, die die Messwerte der Wirbelstrommessanordnung empfängt und Steuerungsdaten für die Strahlerzeugungseinrichtung und/oder die Pulveranordnungseinheit ausgibt. Damit kann in situ die Steuerung bzw. der Betrieb der Vorrichtung zur generativen Herstellung von Bauteilen an die gegebenen Bedingungen angepasst werden.

Darüber hinaus lassen sich die Ergebnisse der Wirbelstromprüfung auch für eine optionale Nachbearbeitung der aufgebrachten Schichten durch den energiereichen Strahl verwenden, sodass bei einer Nachbearbeitung mit dem energiereichen Strahl entsprechende Fehlstellen ausgebessert bzw. eliminiert werden können.

Bei der schichtweisen generativen Herstellung eines Bauteils aus Pulverpartikeln wird der energiereiche Strahl üblicherweise relativ zu der Oberfläche der Pulverpartikelschicht bzw. dem bereits erzeugten Bauteil bewegt, um in den entsprechenden Bereichen, in denen der Strahl auf die Pulverschicht auftrifft ein stoffschlüssiges Verbinden zu erzeugen. Bei der gleichzeitigen Wirbelstromprüfung kann die Spulenanorndung zur Wirbelstromprüfung mit dem energiereichen Strahl über die Fläche der Pulverschicht geführt werden, wobei die Bewegungsgeschwindigkeit des energiereichen Strahls größer sein kann, als die Bewegungsgeschwindigkeit der Spulenanordnung, da sich der energiereiche Strahl zusätzlich relativ zur Spulenanordnung bewegen kann. Aufgrund dieser unterschiedlichen Bewegungsgeschwindigkeit werden die Messwerte der Wirbelstrommessanordnung einer Hochpassfilterung unterzogen, um dadurch das Signal-Rausch-Verhältnis der Messwerte zu verbessern. Gemäß der Erfindung umgibt die Spulenanordnung den energiereichen Strahl, sodass genau der Bearbeitungsbereich des energiereichen Strahls der Wirbelstromprüfung unterzogen wird. Der energiereiche Strahl kann ein Laserstrahl oder ein Elektronenstrahl oder ein sonstiger geeigneter Strahl einer elektromagnetischen Strahlung oder ein entsprechender Partikelstrahl sein.

Der Stoffschluss zwischen den Pulverpartikeln bzw. den Pulverpartikeln und dem bereits bestehenden Bauteil kann durch Schweißen oder Sintern erfolgen.

### KURZBESCHREIBUNG DER FIGUREN

Die beigefügten Zeichnungen zeigen in rein schematischer Weise in
- Fig.1: eine schematischen Darstellung einer erfindungsgemäßen Vorrichtung zur generativen Herstellung von Bauteilen am Beispiel des selektiven Laserschmelzens; und in
- Fig.2: eine Draufsicht auf eine Oberfläche einer Pulverpartikelschicht mit einem Laserstrahl und einer Spulenanordnung bei der Aufbringung einer Schicht.

### AUSFÜHRUNGSBEISPIELE

Weitere Vorteile, Kennzeichen und Merkmale der vorliegenden Erfindung werden bei der nachfolgenden detaillierten Beschreibung eines Ausführungsbeispiels deutlich, wobei die Erfindung nicht auf dieses Ausführungsbeispiel beschränkt ist.

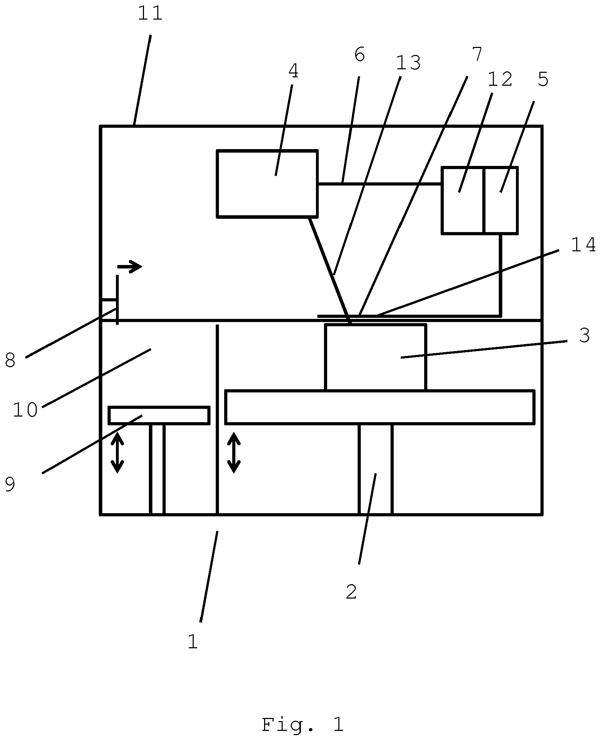

Die Figur 1 zeigt in einer rein schematischen Darstellung eine erfindungsgemäße Vorrichtung 1, wie sie beispielsweise für das selektive Laserschmelzen zur generativen Herstellung eines Bauteils Verwendung finden kann. Die Vorrichtung 1 umfasst einen Hubtisch 2, auf dessen Plattform ein Halbzeug 3 angeordnet ist, auf dem schichtweise Material abgeschieden wird, um ein dreidimensionales Bauteil zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 13 eines Lasers 4 durch Aufschmelzen oder Sintern mit dem bereits vorhandenen Halbzeug 3 verbunden. Die Verbindung des Pulvermaterials in einer Pulverschicht mit dem Halbzeug 3 erfolgt durch den Laser 4 abhängig von der gewünschten Kontur des zu fertigenden Bauteils, sodass beliebige, dreidimensionale Formen erzeugt werden können. Um unerwünschte Reaktionen mit der Umgebungsatmosphäre beim Aufschmelzen oder Sintern zu vermeiden, kann der Prozess in einem abgeschlossenen Raum, der durch ein Gehäuse 11 der Vorrichtung 1 bereit gestellt wird, stattfinden und es kann zudem eine inerte Gasatmosphäre bereit gestellt werden, um beispielsweise Oxidation des Pulvermaterials beim Abscheiden und dergleichen zu vermeiden.

Der Laserstrahl 13 bewegt sich über die über dem Bauteil 3 angeordnete Pulverschicht 14, um an den Stellen, an denen das Bauteil 3 schichtweise erzeugt werden soll, das Pulvermaterial aufzuschmelzen und mit dem bereits existierenden Bauteil 3 stoffschlüssig zu verbinden. Alternativ zum Aufschmelzen kann das Pulvermaterial auch lediglich soweit erwärmt werden, dass ein Sinterprozess stattfindet.

Mit einer nicht näher dargestellten Ablenkungseinheit wird der von der Strahlerzeugungseinheit 4 erzeugte Laserstrahl 13 in zwei voneinander unabhängigen Richtungen so abgelenkt, dass er jede Stelle der Oberfläche der Pulverpartikelschicht 14 erreichen kann. Auf diese Weise ist es möglich jede beliebige dreidimensionale Form für das herzustellende Bauteil 3 zu verwirklichen.

Während der Wechselwirkung des Laserstrahls 13 mit dem Pulver der Pulverschicht 14 ist um den Laserstrahl 13 eine Spulenanordnung 7 vorgesehen, mit der eine Wirbelstromprüfung während des Aufschmelzens oder Versinterns des Pulvers durchgeführt werden kann.

Die Spulenanordnung 7 umfasst eine Senderspule und mindestens eine Empfängerspule, vorzugsweise zwei separate Empfängerspulen (nicht dargestellt), wobei durch die Senderspule Wirbelströme in dem Bearbeitungsbereich des Laserstrahls 7 erzeugt werden und mit der Empfängerspule die durch die Wirbelströme induzierten Magnetfelder gemessen werden. Durch die Messung der durch die Wirbelströme erzeugten Magnetfelder kann auf den Materialzustand im Bearbeitungsbereich des Laserstrahls 13 zurückgeschlossen werden. Diese Erkenntnisse wiederum ermöglichen es die Einstellungen und Parameter der Vorrichtung zur generativen Herstellung des Bauteils in Abhängigkeit von der Wirbelstromprüfung einzustellen. Dazu ist die Spulenanordnung 7 mit einer Betätigungseinheit 5 der Wirbelstrommessanordnung verbunden, die einerseits den Spulenstrom für die Spulenanordnung 7 bereitstellt und andererseits die Messdaten der Spulenanordnung 7 empfängt. Außerdem bewirkt die Betätigungseinheit 5 die Bewegung der Spulenanordnung 7 zusammen mit dem Laserstrahl 13, wobei sich die Spulenanordnung mit einer einzigen integrierten Sender - und Empfängerspule bzw. separaten Sender - und Empfängerspulen in geringem Abstand zur Bearbeitungsfläche oberhalb der Pulverschicht 14 parallel in zwei unabhängigen Richtungen bewegen kann. Die Betätigungseinheit 5 der Wirbelstrommessanordnung ist mit einer Regelungseinheit 12 verbunden, die die Messdaten der Wirbelstromprüfung empfängt und in Abhängigkeit von diesen Messdaten Steuerungsdaten für die Laserstrahlerzeugungseinrichtung 4 erzeugt und über die Steuerdatenleitung 6 an diese übermittelt. Darüber hinaus kann die Regelungseinheit 12 weiterhin die Hubtische 2 und 9 sowie den Schieber 8 mit Steuerungsdaten versorgen, um beispielsweise in Abhängigkeit der Wirbelstromprüfung die Pulveranordnung in der Pulverschicht 14 bzw. die Dicke der Pulverschicht 14 oder dergleichen zu beeinflussen. Damit lässt sich über die Regelungseinheit 12 eine automatische Regelung verwirklichen, mit der über die Spulenanordnung 7 mittels einer Wirbelstromprüfung der Zustand des Schichtaufbaus auf dem Bauteil 3 erfasst und in situ die Parameter für die generative Herstellung, wie beispielsweise Strahlleistung, Bewegungsgeschwindigkeit des Strahls über der Fläche der Pulverschicht 14 bzw. dem Bauteil 3, Dicke der Pulverschicht 14, Größe des Strahlfokus, Bewegungsabfolge des Laserstrahls 13 (Scanstrategie), eventuelle Vorheizung der Pulverschicht 14 und/oder des Bauteils 3 beispielsweise durch induktive Erwärmung und dergleichen eingestellt werden.

Darüber hinaus können die Erkenntnisse aus der Wirbelstromprüfung auch dazu genutzt werden eine Schicht nachzuarbeiten, also ein zweites Mal mit dem Laserstrahl 13 zu belichten, um die bei der Wirbelstromprüfung festgestellte Fehlstellen auszuheilen.

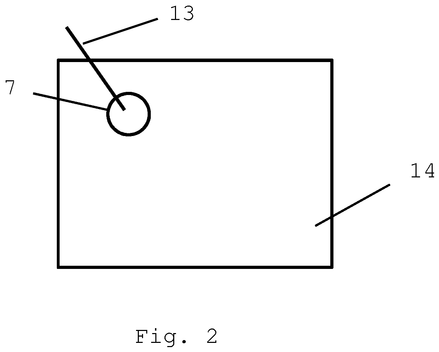

Die Fig. 2 zeigte eine Draufsicht auf die Pulverschicht 14 während einer Bearbeitung mit dem Laserstrahl 13. Wie aus der Fig. 2 zu erkennen ist, ist um den Auftreffpunkt des Laserstrahls 13 auf der Pulverschicht 14 bzw. um den Laserstrahl 13 eine Spulenanordnung 7 vorgesehen, die sich mit dem Laserstrahl 13 über die Oberfläche der Pulverschicht 14 bewegt. Mit Hilfe der Spulenanordnung 7 kann eine Wirbelstromprüfung, wie oben beschrieben, durchgeführt werden, um die Bedingungen für das generative Aufwachsen der Schichten bei der Herstellung des Bauteils 3 anpassen zu können.

Die Spule der Spulenanordnung 7 kann einen Durchmessen von bis zu 5 cm aufweisen und in einem Abstand von 0,1 bis 1 mm von der Oberfläche der Pulverschicht 14 mit einer Geschwindigkeit im Bereich von 50 mm pro Sekunde bis 2000 mm pro Sekunde bewegt werden. Der Laserstrahl 13 kann zusätzlich innerhalb der Spulenanordnung 7 relativ zur Spulenanordnung 7 bewegt werden, beispielsweise durch eine Hin- und Herbewegung quer zur Vorwärtsbewegung des Laserstrahls 13 in Bearbeitungsrichtung. Entsprechend kann die Bewegungsgeschwindigkeit des Lasers höher als die Bewegungsgeschwindigkeit der Spulenanordnung 7 sein.

Obwohl bei der vorliegenden Beschreibung von der Bewegung des Strahls und der Spulenanordnung relativ zum Bauteil bzw. Halbzeug gesprochen wird, ist selbstverständlich, dass die Relativbewegung auch durch eine Bewegung des Halbzeugs gegenüber dem Strahl und der Spulenanordnung realisiert werden kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Änderungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Die vorliegende Offenbarung schließt sämtliche Kombinationen der vorgestellten Einzelmerkmale mit ein.

## Patentansprüche

1. Verfahren zum generativen Herstellen von Bauteilen mittels schichtweisem Aufbau aus einem Pulverwerkstoff durch selektiven Stoffschluss von Pulverpartikeln mittels eines energiereichen Strahls (13),
**dadurch gekennzeichnet, dass**
gleichzeitig mit dem Erzeugen des Stoffschlusses eine Wirbelstromprüfung durchgeführt wird, wobei
- zur Wirbelstromprüfung eine Wirbelstrommessanordnung (5,7) mit mindestens einer Spulenanordnung (7) mit mindestens einer Senderspule und mindestens einer integrierten oder separaten Empfängerspule verwendet wird und
- die Messwerte der Wirbelstromprüfung mittels eines Hochpassfilters auf Basis einer unterschiedlichen Bewegungsgeschwindigkeit von Spulenanordnung (7) und energiereichem Strahl (13) gefiltert werden und
- die Spulenanordnung (7) bei der Wirbelstromprüfung den energiereichen Strahl (13) umgibt und
- ein oder mehrere Messwerte der Wirbelstromprüfung zur automatischen Regelung der Parameter des schichtweisen Aufbaus und des stoffschlüssigen Verbindens und zur Bestimmung, ob und/oder wie eine Nachbearbeitung durchgeführt wird, verwendet werden.

2. Verfahren nach Anspruch 1,
**dadurch gekennzeichnet, dass**
der Stoffschluss durch Schweißen oder Sintern erfolgt.

3. Verfahren nach einem der vorhergehenden Ansprüche,
**dadurch gekennzeichnet, dass**
als energiereicher Strahl (13) ein Laserstrahl oder ein Elektronenstrahl eingesetzt wird.

4. Verfahren nach einem der vorhergehenden Ansprüche,
**dadurch gekennzeichnet, dass**
der energiereiche Strahl (13) in einem beliebigen Muster über eine Fläche mit stoffschlüssig zu verbindenden Pulverpartikeln geführt wird.

5. Verfahren nach einem der vorhergehenden Ansprüche,
**dadurch gekennzeichnet, dass**
die Spulenanordnung (7) bei der Wirbelstromprüfung mit dem energiereichen Strahl über die Oberfläche einer Pulverschicht (14) geführt wird.

6. Vorrichtung zur generativen Herstellung von Bauteilen (3), insbesondere nach dem Verfahren nach einem der vorhergehenden Ansprüche, mit einer Strahlerzeugungseinrichtung (4) und einer Pulveranordnungseinheit (2,8,9,10), wobei die Vorrichtung so eingerichtet ist, dass ein energiereicher Strahl (13) der Strahlerzeugungseinrichtung (4) in einem beliebigen Muster über eine Oberfläche mit von der Pulveranordnungseinheit bereitgestellten Pulverpartikelschicht (14) geführt wird, um diese in vorgegebenen Bereichen der Pulverpartikelschicht (14) mit Pulverpartikeln stoffschlüssig zu verbinden,
**dadurch gekennzeichnet, dass**
die Vorrichtung weiterhin eine Wirbelstrommessanordnung (5,7) umfasst, die geeignet ist, während der stoffschlüssigen Verbindung mittels des energiereichen Strahls eine Wirbelstromprüfung durchzuführen, wobei
- die Wirbelstrommessanordnung (5,7) mindestens eine Spulenanordnung (7) mit mindestens einer Senderspule und mindestens einer integrierten oder separaten Empfängerspule und einen Hochpassfilter umfasst - die Spulenanordnung (7) bei der Wirbelstromprüfung den Energiereichenstrahl (13) umgibt und
- die Vorrichtung eine Regelungseinheit (12) umfasst, die die Messwerte der Wirbelstrommessanordnung empfängt und Steuerungsdaten für die Strahlerzeugungseinrichtung und/oder die Pulveranordnungseinheit ausgibt.

7. Vorrichtung nach Anspruch 6,
**dadurch gekennzeichnet, dass**
die Strahlerzeugungseinrichtung (4) eine Laser - oder Elektronenstrahleinheit aufweist, die eine Ablenkungsvorrichtung umfassen, mit der der jeweilige Strahl über die mit Pulver versehene Fläche geführt werden kann.

## Claims

1. Method for the additive manufacturing of components by means of layer-by-layer construction from a powder material by selectively bonding powder particles by means of a high-energy beam (13), **characterized in that** eddy current testing is carried out at the same time as the bond is being produced,
- an eddy current measuring assembly (5,7) having at least one coil assembly (7) that has at least one transmitting coil and at least one integrated or separate receiving coil being used for the eddy current testing, and
- the measured values from the eddy current testing being filtered by means of a high-pass filter based on a different movement speed of the coil assembly (7) and the high-energy beam (13), and
- the coil assembly (7) surrounding the high-energy beam (13) during the eddy current testing, and
- one or more measured values of the eddy current testing being used to automatically adjust the parameters of the layer-by-layer construction and of the bonded connection and to determine whether and/or how secondary machining is carried out.

2. Method according to claim 1, **characterized in that** the bond is produced by welding or sintering.

3. Method according to either of the preceding claims, **characterized in that** a laser beam or an electron beam is used as the high-energy beam (13).

4. Method according to any of the preceding claims, **characterized in that** the high-energy beam (13) is guided in any pattern over a surface having powder particles to be bonded.

5. Method according to any of the preceding claims, **characterized in that** the coil assembly (7) is guided over the surface of a powder layer (14) together with the high-energy beam during the eddy current testing.

6. Apparatus for the additive manufacturing of components (3), in particular according to the method according to any of the preceding claims, comprising a beam generating device (4) and a powder assembly unit (2,8,9,10), the apparatus being set up such that a high-energy beam (13) of the beam generating device (4) is guided in any pattern over a surface having a powder particle layer (14) provided by the powder assembly unit, in order to bond said layer to powder particles in predetermined regions of the powder particle layer (14), **characterized in that** the apparatus further comprises an eddy current assembly (5,7) which is suitable for carrying out eddy current testing during the bonding by means of the high-energy beam,
- an eddy current measuring assembly (5,7) comprising at least one coil assembly (7) that has at least one transmitting coil and at least one integrated or separate receiving coil and a high-pass filter,
- the coil assembly (7) surrounding the high-energy beam (13) during the eddy current testing, and
- the apparatus comprising a control unit (12) which receives the measured values from the eddy current measuring assembly and outputs control data for the beam generating device and/or the powder assembly unit.

7. Apparatus according to claim 6, **characterized in that** the beam generating device (4) has a laser or electron beam unit which comprises a deflection apparatus, by means of which the particular beam can be guided over the surface provided with powder.

## Revendications

1. Procédé pour la fabrication générative de composants au moyen de la construction par couche à partir d'un matériau en poudre par liaison de matériaux sélective de particules de poudre au moyen d'un faisceau de haute énergie (13),
**caractérisé en ce**
**qu'**un contrôle par courant de Foucault est effectué simultanément à la génération de la liaison de matériaux,
- un dispositif de mesure de courant de Foucault (5,7) comprenant au moins un ensemble de bobines (7) comprenant au moins une bobine émettrice et au moins une bobine réceptrice intégrée ou séparée étant utilisé pour le contrôle par courant de Foucault et
- les valeurs de mesure du contrôle par courant de Foucault étant filtrés au moyen d'un filtre passe-haut sur la base d'une vitesse de déplacement différente de l'ensemble de bobines (7) et du faisceau de haute énergie (13) et
- l'ensemble de bobines (7) entourant le faisceau de haute énergie (13) lors du contrôle par courant de Foucault et
- une ou plusieurs valeurs de mesure du contrôle par courant de Foucault étant utilisées pour régler automatiquement les paramètres de la construction par couche et de la liaison de matériaux et pour déterminer si et/ou comment un traitement ultérieur est effectué.

2. Procédé selon la revendication 1,
**caractérisé en ce que**
la liaison de matériaux est réalisée par soudage ou frittage.

3. Procédé selon l'une quelconque des revendications précédentes,
**caractérisé en ce**
**qu'**un faisceau laser ou un faisceau d'électrons est utilisé comme faisceau de haute énergie (13).

4. Procédé selon l'une quelconque des revendications précédentes,
**caractérisé en ce que**
le faisceau de haute énergie (13) est guidé selon un motif arbitraire sur une surface comprenant des particules de poudre liées par liaison de matériaux.

5. Procédé selon l'une quelconque des revendications précédentes,
**caractérisé en ce que**
l'ensemble de bobines (7) est guidé avec le faisceau de haute énergie sur la surface d'une couche de poudre (14) lors du contrôle par courant de Foucault.

6. Dispositif pour la fabrication générative de composants (3), en particulier par le procédé selon l'une quelconque des revendications précédentes, comprenant un dispositif de génération de faisceau (4) et une unité de disposition de poudre (2,8,9,10), le dispositif étant réglé de telle façon qu'un faisceau de haute énergie (13) du dispositif de génération de faisceau (4) est guidé selon un motif arbitraire sur une surface comprenant une couche de particules de poudre (14) fournies par l'unité de disposition de poudre, pour lier celles-ci par liaison de matériaux à des particules de poudre dans des zones prédéfinies de la couche de particules de poudre (14),
**caractérisé en ce que**
le dispositif comprend en outre un dispositif de mesure de courant de Foucault (5,7) conçu pour réaliser un contrôle par courant de Foucault durant la liaison de matériaux au moyen du faisceau de haute énergie,
- le dispositif de mesure de courant de Foucault (5,7) comprenant au moins un ensemble de bobines (7) comprenant au moins une bobine émettrice et au moins une bobine réceptrice intégrée ou séparée et un filtre passe-haut
- l'ensemble de bobines (7) entourant le faisceau de haute énergie (13) durant le contrôle par courant de Foucault
- le dispositif comprenant une unité de réglage (12) qui reçoit les valeurs de mesure du dispositif de mesure de courant de Foucault et délivre des données de commande pour le dispositif de génération de faisceau et/ou l'unité de disposition de poudre.

7. Dispositif selon la revendication 6,
**caractérisé en ce que**
le dispositif de génération de faisceau (4) comprend une unité laser ou de faisceau d'électrons, qui comprend un dispositif de déviation au moyen duquel le faisceau peut être guidé sur la surface munie de poudre.
